# EUROPÄISCHE PATENTSCHRIFT

(11) **EP 0 537 711 B1**
(45) Veröffentlichungstag und Bekanntmachung des Hinweises auf die Patenterteilung: **01.02.1995**
(21) Anmeldenummer: 92117549.3
(22) Anmeldetag: 14.10.1992
(51) Int. Cl.: F16L 37/092

(54) **Schubgesicherte Muffenverbindung**
Coupling socket protected against shearing
Système de couplage à manchon protégé contre le cisaillement

(30) Priorität: 15.10.1991 DE 4134089
(43) Veröffentlichungstag der Anmeldung: 21.04.1993
(73) Patentinhaber: EISENWERKE FRIED. WILH. DÜKER GmbH & Co., D-97753 Karlstadt (DE)
(72) Erfinder: Imhof, Erich, W-8752 Laufach (DE); Bergmann, Karl-Heinz, W-8759 Hösbach (DE); Vorbeck, Manfred, W-8752 Laufach (DE)
(74) Vertreter: Patentanwälte Leinweber & Zimmermann

(56) Entgegenhaltungen:
- EP-A- 0 235 818
- WO-A-87/05087
- US-A- 4 045 055

## Beschreibung

Die Erfindung bezieht sich auf eine schubgesicherte Steckmuffenverbindung, insbesondere für Formstücke sowie für im Schleudergußverfahren hergestellte Muffenrohre, bei der das Spitzende des einen Rohres mit radialem Spiel in das Muffenende des anderen Rohres einschiebbar ist, in dem ein Dichtring und ein von diesem getrennt ausgebildeter Klemmring angeordnet sind, der aus einer Vielzahl von in Umfangsrichtung mit gegenseitigem Abstand angeordneten Klemmsegmenten besteht, die eine ballig ausgebildete äußere Mantelfläche aufweisen, in Umfangsrichtung jeweils durch eine anvulkanisierte Zwischenschicht aus Gummi o. dgl. miteinander verbunden sind und auf ihrer Innenfläche jeweils eine Zahnung aufweisen, die bei Auftreten von axialen Kräften durch Zusammenwirken der balligen Mantelfläche mit einer sich konisch zum Ende verjüngenden Innenfläche der Rohrmuffe radial gegen das Spitzende drücken, wobei an den Klemmring ein am Muffenstirnende festlegbares, ihn tragendes Halteteil aus Elastomer angeformt ist, das einen an der Muffenstirnfläche zur Anlage gelangenden ringscheibenförmigen Abschnitt sowie einen sich vom Innenrand der Muffenstirnfläche zum Klemmring erstreckenden, sich etwa konisch verjüngenden Verbindungsabschnitt umfaßt, der in Abhängigkeit von den Außenabmessungen des einzuführenden Spitzendes zusammen mit dem Klemmring aufweitbar und dabei in axialer Richtung dehnbar ist.

Bei einer vorbekannten Steckmuffenverbindung dieser Art (EP 0 235 818 B1), bei der der ringscheibenförmige Abschnitt und der sich anschließende zum Klemmring führende aufweitbare Verbindungsabschnitt des Halteteils etwa einheitlich stark ausgeführt sind, hat sich trotz des sich an den ringscheibenförmigen Abschnitt anschließenden, an der Außenseite des Muffenendes anliegenden ringzylindrischen Abschnittes des Halteteils die Tatsache als nachteilig herausgestellt, daß insbesondere bei Muffenrohren mit großen Nennweiten während der Montage die Halteteilfestlegung am Muffenende zu Schwierigkeiten führt, bedingt durch die Tendenz der Klemmsegmente, unter ihrem Gewicht das gesamte Halteteil vom Muffenende zu lösen. Außerdem hat sich herausgestellt, daß in nachteiliger Weise beim Ineinanderschieben der Rohrenden das Spitzende des einen Rohrendes über den das Spitzende umfassenden, sich etwa konisch verjüngenden Verbindungsabschnitt des Halteteils unter der resultierenden starken axialen Beanspruchung häufig den an der Muffenstirnfläche anliegenden ringscheibenförmigen Abschnitt ganz oder teilweise um die am Innenrand der Muffenstirnfläche befindliche Muffenkante herum in den Bereich zwischen Spitzende und Muffe hineinzieht.

Der Erfindung liegt die Aufgabe zugrunde, die schubgesicherte Steckmuffenverbindung der vorgenannten Art so weiter auszubilden, daß in baulich relativ einfacher Weise eine einwandfreie Festlegung des Halteteils des Klemmrings mit seinen Klemmsegmenten an der Innenfläche der Muffe vor und während des Einschiebens des Rohrspitzendes in die Muffe gewährleistet ist.

Die schubgesicherte Steckmuffenverbindung nach der Erfindung, bei der diese Aufgabe gelöst ist, zeichnet sich im wesentlichen dadurch aus, daß der an der Muffenstirnfläche zur Anlage gelangende ringscheibenförmige Abschnitt im Bereich des Innenrandes der Muffenstirnfläche einen verstärkt ausgebildeten Übergangsbereich höherer Biegesteifigkeit umfaßt, von dem der zum Klemmring führende Verbindungsabschnitt ausgeht, und daß die Muffenstirnfläche innenrandseitig einen dem Querschnitt des verstärkt ausgebildeten Übergangsbereichs angepaßten Ausnehmungsbereich aufweist.

Bei einer derartigen Ausgestaltung einerseits des Halteteils und andererseits der Rohrmuffe läßt sich vor dem Zusammenstecken der Rohre der Klemmring auch von zu verbindenden Muffenrohren mit größerer Nennweite von NW 600 bis 1000 ohne die Gefahr eines selbständigen Lösens am Muffenstirnende festlegen. Überdies ist sichergestellt, daß während des Hineinschiebens des Spitzendes des einen Rohres in das Muffenende des anderen Rohres der verstärkt ausgebildete Übergangsbereich, der im entsprechend ausgebildeten Ausnehmungsbereich der Muffenstirnfläche gelagert ist, ein Herumziehen des an der Muffenstirnfläche anliegenden Abschnittes des Halteteils um die am Innenrand der Muffenstirnfläche befindliche Muffenkante herum und in den Bereich zwischen Spitzende und Muffe hinein vermieden wird. In vielen Fällen hat sich ferner gezeigt, daß auf den beim Halteteil der herkömmlichen Steckmuffenverbindung vorgesehen Kragen mit einem an der Außenseite des Muffenendes zur Anlage gelangenden ringzylindrischen Abschnitt verzichtet werden kann. Dadurch ist die Gefahr der Beschädigung des Halteteils in diesem Kragenbereich vermieden, die sich dann häufig gezeigt hat, wenn mit dem herkömmlichen Halteteil versehene Muffenrohre während einer vorübergehenden Lagerung aufeinandergestapelt werden mußten bzw. dann, wenn sie am Einsatzort d.h. beim Verlegen entlang der vorgesehenen Trasse ergriffen und ineinander geschoben werden.

Als besonders zweckmäßig im Hinblick auf die Lagesicherung des Halteteils an der Muffe bei der Montage hat es sich herausgestellt, wenn in weiterer Ausgestaltung der Steckmuffenverbindung dem verstärkt ausgebildeten Übergangsbereich des Halteteils ein die Biegesteifigkeit erhöhender Stahlring zugeordnet ist.

Dieser Stahlring kann in den verstärkt ausgebildeten Übergangsbereich einvulkanisiert sein, d.h. mit dem Halteteil eine Baueinheit bilden. Als in fertigungstechnischer Hinsicht besonders vorteilhaft hat es sich jedoch erwiesen, wenn dem Stahlring ein im verstärkt ausgebildeten Übergangsbereich ausgebildeter axialer Einführspalt zugeordnet ist. Durch diesen läßt sich nämlich vor der Montage der Stahlring in den verstärkt ausgebildeten Übergangsbereich einsetzen und im Bedarfsfall nach dem Verbinden aufeinanderfolgender Muffenrohre durch Einschieben des Spitzendes des einen Rohres in das Muffenende des anderen Rohres wieder entnehmen.

Ein besonders guter Halt des die Biegesteifigkeit des Übergangsbereichs erhöhenden Stahlrings läßt sich in weiterer Ausgestaltung dadurch sichern, daß die Breite des Einführspalts kleiner als der Durchmesser des Stahlrings bemessen ist.

Der Übergangsbereich kann unterschiedliche Formgebung erhalten. Besonders günstig zur Gewährleistung der Stabilität und Biegesteifigkeit ist es, wenn der verstärkt ausgebildete Übergangsbereich des Halteteils einen etwa dreieckigen Querschnitt aufweist und wenn der Ausnehmungsbereich der Muffenstirnfläche innenrandseitig durch eine etwa konisch geformte Abschrägung der Querschnittsform des Übergangsbereichs des Halteteils angepaßt ist.

Gemäß einer abgewandelten Ausführung hat es sich als günstig erwiesen, wenn der verstärkt ausgebildete Übergangsbereich des Halteteils einen etwa rechteckigen Querschnitt besitzt und wenn der Ausnehmungsbereich der Muffenstirnfläche durch eine innenrandseitige Abstufung der Querschnittsform des verstärkt ausgebildeten Übergangsbereichs des Halteteils angepaßt ist.

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird.Es zeigen
- Fig. 1: einen Schnitt durch das Spitzende eines Rohres mit übergeschobenem Muffenende des angrenzenden Rohres,
- Fig. 2: einen Ausschnitt aus Fig. 1, in größerem Maßstab,
- Fig. 3: eine Schnittansicht einer abgewandelten Ausführung,
- Fig. 4: einen Ausschnitt aus Fig. 3, in größerem Maßstab,
- Fig. 5: eine weiterhin abgewandelte Ausführung und
- Fig. 6: einen Ausschnitt aus Fig. 5, in größerem Maßstab.

Wie aus der Zeichnung ersichtlich, weist das Muffenrohr 1 an seinem einen Ende, dem Muffenende 2 eine Muffe auf, in die mit radialem Spiel das Spitzende 3 eines angrenzenden Muffenrohres 1 eingeschoben werden kann. Im Inneren der Muffe ist eine Ausnehmung 4 vorgesehen, die in bestimmten Grenzen eine Relativverschwenkung der Rohre 1 zuläßt. Im Anschluß an diese Ausnehmung ist eine Abdichtungskammer 5 gebildet, die an ihrem einen Ende durch eine radial verlaufende Innenschulter 6 des Muffenendes 2 begrenzt ist. Im Abstand von der Innenschulter 6 verläuft im Bereich der Abdichtungskammer 5 ein Ringwulst 7. Dieser dient der Lagesicherung eines Dichtrings 8, der einen Kopfabschnitt 9 aus weicherem elastomerem Material und einen Fußabschnitt 10 aus härterem elastomerem Material aufweist. Dieser Fußabschnitt 10 befindet sich in einer Ringnut 11, die einerseits von dem Ringswulst 7 und andererseits von einer Stützschulter 12 begrenzt ist, die gleichzeitig das andere Ende der Abdichtungskammer 5 begrenzt. Der Dichtring 8 ist auf diese Weise in seiner Position festgelegt und behält die veranschaulichte Position auch dann bei, wenn das Spitzende 3 unter Verformung des Kopfabschnitts 9 in das Muffenende 2 eingeführt wird. Zwischen der Stützschulter 12 und dem stirnseitigen Ende des Muffenendes 2 befindet sich eine Verriegelungskammer 13, die der Aufnahme eines Klemmrings 14 dient. Dieser Klemmring 14 besteht aus einer Vielzahl von in Umfangsrichtung mit gegenseitigem Abstand angeordneten Klemmsegmenten 15. Die Klemmsegmente 15 sind in Umfangsrichtung jeweils durch eine in der Zeichnung nicht dargestellte anvulkanisierte Zwischenschicht aus Gummi o. dgl. miteinander verbunden. Auf ihrer der Verriegelungskammer 13 zugewandten Seite weisen die Klemmsegmente 15 jeweils eine ballig ausgebildete äußere Mantelfläche 17 auf. Diese wirkt mit einer sich konisch zum Ende verjüngenden Innenfläche 18 der Rohrmuffe zusammen, und zwar wird durch sie eine auf der Innenfläche der Klemmsegmente 15 jeweils vorgesehene Zahnung 19 bei Auftreten von axialen Kräften radial gegen das Spitzende 3 gedrückt.

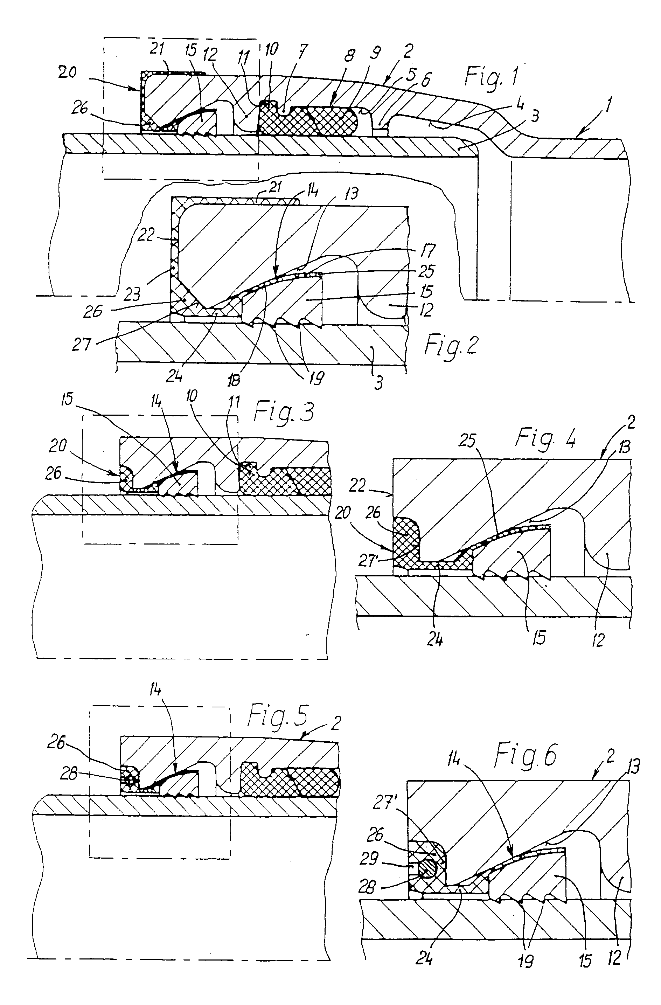

Wie aus der Zeichnung hervorgeht, ist an den Klemmring 14 ein am Muffenstirnende festlegbares, ihn tragendes Halteteil 20 aus Elastomer angeformt. Dieses Halteteil 20 umfaßt im Beispiel nach Fig. 1 einen an der Außenseite des Muffenendes 2 zur Anlage gelangenden ringzylindrischen Abschnitt 21, einen sich anschließenden, an der Muffenstirnfläche 22 zur Anlage gelangenden ringscheibenförmigen Abschnitt 23 sowie einen sich vom Innenrand der Muffenstirnfläche zum Klemmring 14 erstreckenden, sich in entspanntem Zustand etwa konisch verjüngenden Verbindungsabschnitt 24. Dieser ist in Abhängigkeit von den Außenabmessungen des einzuführenden Spitzendes 3 zusammen mit dem Klemmring 14 aufweitbar und dabei in axialer Richtung dehnbar, so daß er schließlich die in der Zeichnung gezeigte aufgeweitete Form erhält.

Aus der Zeichnung geht ferner hervor, daß der Verbindungsabschnitt 24 des Halteteils 20 an der balligen Mantelfläche 17 des Klemmrings 14, die der sich konisch verjüngenden Innenfläche 18 des Muffenendes zugewandt ist, mit einer isolierenden Auflage 25 versehen ist, die dazu dient, die miteinander verbundenen Rohre elektrisch voneinander zu isolieren. Diese Auflage 25 kann durch eine Emailschicht oder durch eine glasfaserverstärkte Kunststoffschicht gebildet sein, vorzugsweise besteht sie jedoch aus einer Elastomerschicht.

Der Zeichnung ist ferner entnehmbar, daß sich bei der Ausführung nach den Fig. 1 und 2, jedoch auch bei den abgewandelten Ausführungen nach den Fig. 3 bis 6 jeweils der an der Muffenstirnfläche 22 zur Anlage gelangende ringscheibenförmige Abschnitt 23 im Bereich des Innenrandes der Muffenstirnfläche 22 einen verstärkt ausgebildeten Übergangsbereich 26 höherer Biegesteifigkeit umfaßt, von dem der zum Klemmring 14 führende Verbindungsabschnitt 24 ausgeht. Gleichzeitig weist die Muffenstirnfläche 22 innenrandseitig einen dem Querschnitt des verstärkt ausgebildeten Übergangsbereichs 26 angepaßten Ausnehmungsbereich 27 auf. Mit diesen einfachen Maßnahmen ist dafür gesorgt, daß eine einwandfreie Funktion des Halteteils 20 des Klemmrings mit seinen Klemmsegmenten 15 an der Innenfläche 13 der Muffe vor allem bei Steckmuffenverbindungen für große Nennweiten sowohl vor als auch während des Einschiebens des Rohrspitzendes in die Muffe gewährleistet ist. Dies stellt die höhere Biegesteifigkeit durch den verstärkt ausgebildeten Übergangsbereich 26 sicher. Letzterer verhindert auch ein Herum- und Hineinziehen des an der Stirnseite 22 der Muffe anliegenden Abschnitts des Halteteils um die Muffenkante herum und in den Bereich zwischen Spitzende und Muffe hinein.

Dieser Vorteil wird auch bei der abgewandelten Ausführung nach den Fig. 3 und 4 erreicht, bei der der verstärkt ausgebildete Übergangsbereich 26 nicht einen etwa dreieckigen Querschnitt aufweist wie die Ausführung nach Fig. 1 und 2, sondern einen etwa rechteckigen Querschnitt. Dabei ist der Ausnehmungsbereich der Muffenstirnfläche durch eine innenrandseitige Abstufung 27' anstelle der etwa konisch geformten Abschrägung 27 der Ausführung nach Fig. 1 und 2 gebildet. In diesem Fall kann sogar auf den gemäß Fig. 1 und 2 vorhandenen äußeren Bereich des ringscheibenförmigen Abschnitts 23, an den sich der an der Außenseite des Muffenendes zur Anlage gelangende ringzylindrische Abschnitt 21 anschließt, verzichtet werden. Auch letzterer entfällt somit, was die Handhabung der Rohre ohne die Gefahr der Beschädigung des Halteteils bei der Verlegung, insbesondere jedoch beim Stapeln der mit der Halteteil-Klemmring-Einheit ausgerüsteten Muffenrohre begünstigt.

Vor allem bei Halteteil-Klemmring-Einheiten für Muffenrohre sehr großer Nennweiten ist es in weiterer Ausgestaltung von Vorteil, gemäß den Fig. 5 und 6 dem verstärkt ausgebildeten Übergangsbereich 26 des Halteteils einen die Biegesteifigkeit erhöhenden Stahlring 28 zuzuordnen. Für diesen Stahlring 28 ist im verstärkt ausgebildeten Übergangsbereich 26 ein axialer Einführspalt 29 vorgesehen, durch den der Stahlring bei Bedarf eingesetzt und ggf. wieder entnommen werden kann. Für eine besonders gute Halterung sorgt dabei die Wahl einer Breite des Einführspalts 29, die kleiner als der Durchmesser des Stahlrings 28 bemessen ist.

## Patentansprüche

1. Schubgesicherte Steckmuffenverbindung, insbesondere für Formstücke sowie für im Schleudergußverfahren hergestellte Muffenrohre (1) bei der das Spitzende (3) des einen Rohres mit radialem Spiel in das Muffenende (2) des anderen Rohres einschiebbar ist, in dem ein Dichtring (8) und ein von diesem getrennt ausgebildeter Klemmring (14) angeordnet sind, der aus einer Vielzahl von in Umfangsrichtung mit gegenseitigem Abstand angeordneten Klemmsegmenten (15) besteht, die eine ballig ausgebildete äußere Mantelfläche (17) aufweisen, in Umfangsrichtung jeweils durch eine anvulkanisierte Zwischenschicht (16) aus Gummi o. dgl. miteinander verbunden sind und auf ihrer Innenfläche (18) jeweils eine Zahnung (19) aufweisen, die bei Auftreten von axialen Kräften durch Zusammenwirken der balligen Mantelfläche (17) mit einer sich konisch zum Ende verjüngenden Innenfläche (18) der Rohrmuffe radial gegen das Spitzende (3) drücken, wobei an den Klemmring (14) ein am Muffenstirnende festlegbares, ihn tragendes Halteteil (20) aus Elastomer angeformt ist, das einen an der Muffenstirnfläche (22) zur Anlage gelangenden ringscheibenförmigen Abschnitt (23) sowie einen sich vom Innenrand der Muffenstirnfläche (22) zum Klemmring (14) erstreckenden, sich etwa konisch verjüngenden Verbindungsabschnitt (24) umfaßt, der in Abhängigkeit von den Außenabmessungen des einzuführenden Spitzendes (3) zusammen mit dem Klemmring (14) aufweitbar und dabei in axialer Richtung dehnbar ist, dadurch gekennzeichnet, daß der an der Muffenstirnfläche (22) zur Anlage gelangende ringscheibenförmige Abschnitt (23) im Bereich des Innenrandes der Muffenstirnfläche (22) einen verstärkt ausgebildeten Übergangsbereich (26) höherer Biegesteifigkeit umfaßt, von dem der zum Klemmring (14) führende Verbindungsabschnitt (24) ausgeht, und daß die Muffenstirnfläche (22) innenrandseitig einen dem Querschnitt des verstärkt ausgebildeten Übergangsbereichs (26) angepaßten Ausnehmungsbereich aufweist.

2. Steckmuffenverbindung nach Anspruch 1, dadurch gekennzeichnet, daß dem verstärkt ausgebildeten Übergangsbereich (26) des Halteteils ein die Biegesteifigkeit erhöhender Stahlring (28) zugeordnet ist.

3. Steckmuffenverbindung nach Anspruch 2, dadurch gekennzeichnet, daß dem Stahlring (28) ein im verstärkt ausgebildeten Übergangsbereich (26) ausgebildeter axialer Einführspalt (29) zugeordnet ist.

4. Steckmuffenverbindung nach Anspruch 3, dadurch gekennzeichnet, daß die Breite des Einführspalts (29) kleiner als der Durchmesser des Stahlrings (28) bemessen ist.

5. Steckmuffenverbindung nach einem der Ansprüche 1 bis 4, dadurch gekennzeichnet, daß der verstärkt ausgebildete Übergangsbereich (26) des Halteteils einen etwa dreieckigen Querschnitt aufweist und daß der Ausnehmungsbereich der Muffenstirnfläche innenrandseitig durch eine etwa konisch geformte Abschrägung (27) der Querschnittsform des Übergangsbreichs (26) des Halteteils angepaßt ist.

6. Steckmuffenverbindung nach einem der Ansprüche 1 bis 4, dadurch gekennzeichnet, daß der verstärkt ausgebildete Übergangsbereich (26) des Halteteils einen etwa rechteckigen Querschnitt besitzt und daß der Ausnehmungsbereich der Muffenstirnfläche durch eine innenrandseitige Abstufung (27') der Querschnittsform des verstärkt ausgebildeten Übergangsbereichs (26) des Halteteils angepaßt ist.

## Claims

1. Push-fit socket joint protected against shearing, in particular for fittings and for socket pipes (1) manufactured by the centrifugal casting method, in which joint the spigot end (3) of one pipe can be pushed into the socket end (2) of the other pipe with radial play, in which socket end there are arranged a sealing ring (8) and a clamping ring (14) formed separately from the said sealing ring, which clamping ring consists of a plurality of clamping segments (15) arranged with mutual spacing in the circumferential direction, which have an outer shell (17) formed with a bulging shape but which are connected together in the circumferential direction by a respective moulded-on intermediate layer (16) of rubber or similar material and have on their inner surface (18) respective toothing (19) which presses radially against the spigot end (3), when axial forces occur, because of cooperation of the bulging shell (17) with an inner surface (18) of the pipe socket, which inner surface tapers conically towards the end, wherein there is pre-formed on the clamping ring (14) a holding part (20) made of elastomer which can be fixed to the socket front end, holding the clamping ring (14), and which comprises an annular disc shaped section (23) coming into contact with the socket front surface (22) as well as a connecting section (24) extending from the inner edge of the socket front surface (22) to the clamping ring (14) and tapering approximately conically, which connecting section, together with the clamping ring (14), can be expanded in dependence upon the outer dimensions of the spigot end (3) to be inserted and can be extended in the axial direction at the same time, characterised in that the annular disc shaped section (23) coming into contact with the socket front surface (22) comprises, in the region of the inner edge of the socket front surface (22), a transition region (26) having a reinforced construction and high resistance to bending, from which transition region there starts the connecting section (24) leading to the clamping ring (14), and in that the socket front surface (22) has on the inner edge side a recessed region which matches the cross-section of the transition region (26) having a reinforced construction.

2. Push-fit socket joint according to claim 1, characterised in that a steel ring (28) which increases the resistance to bending is associated with the transition region (26) of the holding part having a reinforced construction.

3. Push-fit socket joint according to claim 2, characterised in that in an insertion gap (29) formed axially in the transition region (26) having a reinforced construction is associated with the steel ring (28).

4. Push-fit socket joint according to claim 3, characterised in that the width of the insertion gap (29) is dimensioned to be smaller than the diameter of the steel ring (28).

5. Push-fit socket joint according to one of claims 1 to 4, characterised in that the transition region (26) of the holding part having a reinforced construction has an approximately triangular cross-section and in that the recessed region of the socket front surface matches, on the inner edge side, the cross-sectional shape of the transition region (26) of the holding part by means of an approximately conical bevelling (27).

6. Push-fit socket joint according to one of claims 1 to 4, characterised in that the transition region (26) of the holding part having a reinforced construction has an approximately rectangular cross-section and in that the recessed region of the socket front surface matches the cross-sectional shape of the transition region (26) of the holding part having a reinforced construction by means of a gradation (27') on the inner edge side.

## Revendications

1. Système de couplage à manchon à enfichage protégé contre le cisaillement, en particulier pour des pièces moulées ainsi que des tubes de manchon (1) fabriqués suivant le procédé de moulage par centrifugation, dans lequel l'extrémité pointue (3) d'un premier tube est enfilable avec un jeu radial dans l'extrémité de manchon (2) de l'autre tube, dans lequel sont disposées une bague d'étanchéité (8) et une bague de serrage (14) réalisée séparément de celle-ci et composée d'une pluralité de segments de serrage (15) disposés suivant un espacement mutuel en direction périphérique et présentant une surface d'enveloppe extérieure (17) bombée, en étant reliés ensemble en direction périphérique chacun au moyen d'une couche intermédiaire (16) vulcanisée sur eux, en caoutchouc ou analogue et présentant sur leur surface intérieure (18) pour chacun une denture (19) qui, en cas de production d'efforts axiaux par coopération de la surface d'enveloppe (17) bombée, presse radialement, avec une surface intérieure (18) du manchon tubulaire allant en s'effilant de façon conique vers l'extrémité, contre l'extrémité pointue (3), sur la bague de serrage (14) étant formée, d'un seul tenant, une partie support (20) en élastomère, pouvant être fixée sur l'extrémité frontale du manchon, portant la bague de serrage (14), comprenant un tronçon (23) en forme de disque annulaire venant en appui sur la face frontale de manchon (22) ainsi qu'un tronçon de liaison (24) s'étendant depuis le bord extérieur de la surface frontale de manchon (22) vers la bague de serrage (14), en allant en s'effilant quelque peu de façon conique, pouvant se dilater en fonction des dimensions extérieures de l'extrémité pointue (3) en cours d'introduction, conjointement avec la bague de serrage (14), et la dilatation se faisant alors en direction axiale, caractérisé en ce que le tronçon (23) en forme de disque annulaire, venant en appui sur la surface frontale de manchon (22), comprend, dans la zone du bord intérieur de la surface frontale de manchon (22), une zone de transition (26), renforcée par un épaississement, ayant une rigidité en flexion plus élevée, d'où part le tronçon de liaison (24) menant à la bague de serrage (14) et en ce que la surface frontale de manchon (22) présente en bordure intérieure une zone d'évidement adaptée à la section transversale de la zone de transition (24) renforcée par épaississement.

2. Système de couplage à manchon enfichable selon la revendication 1, caractérisé en ce qu'une bague en acier (28) augmentant la rigidité en flexion est associée à la zone de transition (26), renforcée par épaississement, de la partie de maintien.

3. Système de couplage à manchon enfichable selon la revendication 2, caractérisé en ce qu'un interstice d'introduction axial (29) réalisé dans la zone de transition (26) renforcée par épaississement est associé à la bague en acier (28).

4. Système de couplage à manchon enfichable selon la revendication 3, caractérisé en ce que la largeur de l'interstice d'introduction (29) est inférieure au diamètre de la bague en acier (28).

5. Système de couplage à manchon enfichable selon l'une des revendications 1 à 4, caractérisé en ce que la zone de transition (26) renforcée par épaississement de la partie de maintien a une section transversale à peu près triangulaire, et en ce que la zone d'évidement de la surface frontale de manchon est adaptée en bordure intérieure au moyen d'un chanfreinage (27), à forme conique, de la forme de la section transversale de la zone de transition (26) de la partie de maintien.

6. Système de couplage à manchon enfichable selon l'une des revendications 1 à 4, caractérisé en ce que la zone de transition (26), renforcée par épaississement, de la partie de maintien a une section transversale rectangulaire, et en ce que la zone à évidement de la surface frontale de manchon est adaptée, au moyen d'un étagement (27') réalisé en bordure intérieure, à la forme de la section transversale de la zone de transition (26), renforcée par épaississement, de la partie de maintien.
